# EUROPEAN PATENT APPLICATION

(11) **EP 4 434 943 A1**
(43) Date of publication of application: **25.09.2024**
(21) Application number: 22896038.1
(22) Date of filing: 16.11.2022
(51) Int. Cl.: C02F 1/58, C02F 1/72, C02F 1/467, C02F 1/461, C02F 1/02, C02F 1/32, C02F 1/66

(54) **APPARATUS AND METHOD FOR TREATING WASTEWATER CONTAINING NON-DEGRADABLE ORGANIC MATERIALS**

(30) Priority: 18.11.2021 KR 20210159722
(71) Applicant: Techwin Co., Ltd., Cheongju-si, Chungcheongbuk-do 28580 (KR)
(72) Inventor: KIM, Jung Sik, Sejong 30098 (KR); SHIN, Hyun Su, Daejeon 34390 (KR); HYUN, Jun Taek, Cheongju-si Chungcheongbuk-do 28124 (KR); LEE, Seung Hyun, Cheongju-si Chungcheongbuk-do 28562 (KR)
(74) Representative: Plasseraud IP
(86) International application number: PCT/KR2022/018031
(87) International publication number: WO 2023/090832

(57) **Abstract**

Disclosed are an apparatus for treating wastewater containing non-degradable organic materials and a method for treating wastewater using same. The apparatus comprises: an oxidation reaction bath in which wastewater is oxidized with an oxidizing agent to treat TOC and T-N; and an electrolysis bath having a positive electrode bath, in which an electrolyte solution is electrolyzed to produce and provide the oxidizing agent used in the oxidation reaction bath, and a negative electrode bath, which is partitioned from the positive electrode bath by a partition wall and in which pollutants remaining in the wastewater chemically treated in the reaction bath are reduced.

## Description

### [Technical Field]

The present invention relates to an apparatus and method for treating wastewater containing a non-degradable organic material, and more specifically, to an apparatus and method for treating wastewater containing a non-degradable organic material which causes a high concentration of total organic carbon (TOC) and total nitrogen (TN) such as ethanolamine (ETA).

### [Background Art]

Problems regarding the treatment of industrial wastewater that inevitably arise due to industrial development are inevitable, and wastewater treatment technology is being developed in accordance with the importance of the environment.

Nevertheless, there is a difficulty in treating wastewater containing non-degradable organic materials containing high concentrations of total organic carbon (TOC) and total nitrogen (TN), which do not decompose well in the natural environment and are difficult to decompose even by biological treatment processes such as an activated sludge method and the like. Therefore, various treatment technologies are applied.

Examples of pollutants that cause the non-degradable TOC and TN include aromatic benzene ring compounds such as chlorobenzene, nitrobenzene, decahydronaphthalene, benzene, cresol, xylene, tetrahydro, naphthalene, tetrahydrofuran, toluene, phenol, ethylphenol, ethylbenzene, pyridine, and the like; and halogenated organic compounds such as trichloroethylene, tetrachloroethylene, perchloroethylene, pentachlorophenol, and the like, and they are contained in large amounts in various types of industrial wastewater including wastewater from the textile dyeing process and wastewater from the paper industry.

Particularly, in the case of nuclear power plants, ethanolamine (ETA) wastewater containing a high concentration of organic material and sulfuric acid, which is generated during regeneration of condensate polishing plants, is mixed with other water systems, transported to wastewater treatment facilities, and primarily treated through physicochemical treatment methods such as flocculation, sedimentation, and filtration, and the non-degradable material ETA is treated through electrolysis.

However, so far, ETA wastewater has not been effectively treated due to various scale-causing materials contained in the salt input for electrolysis treatment and the regenerated wastewater from condensate polishing plants and the non-degradability of ETA.

In addition, as the related art, there is a complex treatment process in which physicochemical, biological, and electrochemical treatment methods are combined to treat ETA-containing wastewater, and representative examples of technologies of treating ETA-containing wastewater and wastewater containing non-degradable organic materials are as follows.

At Kyushu Electric Power Co., Inc., to treat organic wastewater containing ETA, hydrazine, and ammonia, the pH of the organic wastewater is maintained between 5 and 11, 5000 ppm or more of chlorine ions are input to the wastewater, the resulting wastewater is passed through an electrolysis device, and then organic materials are decomposed in a UV reaction bath. This is a method in which wastewater is recovered when the target water quality is reached while continuing to circulate through electrolysis and UV treatment processes, and was found to be effective in reducing the chemical oxygen demand (COD) of organic wastewater with a COD of 1000 ppm or more and an electrical conductivity of 100 uS/cm or more.

In Japan's Ikata nuclear power plant, a wastewater treatment process in which suspended matter and precipitable organic and inorganic materials are removed by precipitation using a physicochemical treatment process, and COD- and TN-causing materials dissolved in water are removed using electrolysis, catalytic oxidation, and activated carbon is used.

However, the treatment method of Kyushu Electric Power Co., Inc. is similar to domestic technology, and the treatment effect of an electrolysis device is expected to be insufficient due to scale-causing materials contained in nuclear power plant wastewater. Also, the wastewater treatment process of the Ikata nuclear power plant guarantees the performance of an electrolysis device by excluding inorganic materials through pretreatment, but there is a disadvantage in that it is difficult to operate because many maintenance elements are required due to its complicated treatment process.

At Mitsubishi Heavy Industries, Ltd., a technology of biologically treating nuclear power plant wastewater by sequentially going through an anaerobic tank, an activated sludge tank, and an aeration tank is used, but this technology requires a large area, has problems with odor generation, and exhibits very low treatment efficiency.

Meanwhile, as another conventional technology of treating non-degradable COD-causing materials, there is a Fenton oxidation method which is one of the physicochemical treatment methods. The Fenton oxidation method employs a Fenton reaction which is the oxidation reaction of organic materials, and is known to be an effective method of oxidizing pollutants by producing hydroxyl radicals (-OH) having strong oxidizing power through a reaction between ferrous ions and hydrogen peroxide. However, when a high concentration of non-degradable ETA is oxidized through the Fenton reaction, excessive amounts of hydrogen peroxide and iron (II) sulfate are required because ETA should be treated to become harmless CO₂ by destroying the carbon covalent bond of ETA, and a large amount of sludge is generated due to the input iron (II) sulfate, which significantly decrease economic efficiency. Also, since the Fenton reaction is effective only under acidic conditions and is very sensitive to pH conditions, precise pH management is required.

In addition, among advanced oxidation processes, the ozone treatment method is a method in which non-degradable materials are oxidized by taking advantage of the fact that ozone produced by combining three oxygen atoms is a very strong oxidizing agent. This ozone is produced by an electrical discharge method, a photochemical reaction method, or the like, and the electrical discharge method, which produces a large amount of ozone with relatively high efficiency, is most commonly used. Ozone is an oxidizing agent that is advantageous under alkaline conditions and functions as an oxidizing agent by producing hydroxyl radicals through decomposition of ozone under alkaline conditions. However, ozone has a disadvantage in that it does not easily dissolve in water and is sensitive to pH conditions like the Fenton reaction. Also, ozone is known to exhibit a unique pungent smell even at a low concentration of 0.02 ppm or less and to be harmful to the human body upon exposure to a concentration of 0.02 ppm or more for a long period of time.

### [Related Art Documents]

### [Patent Documents]

(Patent Document 1) Korean Registered Patent No. 10-2122384
(Patent Document 2) Korean Registered Patent No. 10-1528530

### [Disclosure]

### [Technical Problem]

The present invention is designed to solve the above problems of the related art and directed to providing an apparatus and method for treating high-concentration wastewater containing a non-degradable organic material, which are improved to effectively treat wastewater containing a non-degradable organic material which causes a high concentration of total organic carbon (TOC) and total nitrogen (T-N), such as ethanolamine (ETA).

### [Technical Solution]

One aspect of the present invention provides an apparatus for treating wastewater containing a non-degradable organic material, which includes: an oxidation reaction bath configured to oxidize wastewater using an oxidizing agent to treat TOC and T-N; and an electrolysis bath having an anode bath configured to electrolyze an electrolyte to produce and provide the oxidizing agent used in the oxidation reaction bath and a cathode bath partitioned from the anode bath by a partition and configured to reduce pollutants remaining in the treated water chemically treated in the oxidation reaction bath.

Accordingly, the TOC and T-N contained in high-concentration wastewater can be effectively treated.

In this case, the apparatus may further include an oxidizing agent supply unit configured to receive an oxidizing agent to be supplied to the oxidation reaction bath from the anode bath of the electrolysis bath and supply the oxidizing agent to the oxidation reaction bath.

Accordingly, the oxidizing agent can be stably supplied to the oxidation reaction bath to oxidize wastewater.

In addition, the apparatus may further include a pH adjusting bath configured to adjust a pH of wastewater containing TOC and T-N.

Additionally, the apparatus may further include an oxidizing agent promoting means configured to activate the oxidizing agent in the oxidation reaction bath.

In addition, the oxidizing agent promoting means may include at least one selected from a heater configured to heat the oxidation reaction bath, a UV irradiator configured to radiate UV light, and a catalyst supply unit configured to supply a catalyst to the oxidation reaction bath.

Accordingly, the oxidation efficiency of the oxidizing agent in the oxidation reaction bath can increase.

In addition, the oxidizing agent used in the oxidation reaction bath may be a chlorine-based oxidizing agent, and the chlorine-based oxidizing agent may include at least one selected from chlorine, hypochlorous acid, and hypochlorite.

Additionally, the oxidation reaction bath may include a means configured to dividedly input the oxidizing agent, and the means may include at least one selected from a plurality of oxidizing agent inlets and an apparatus for controlling the input amount of an oxidizing agent.

Accordingly, the input frequency of the oxidizing agent and the input position can be adjusted according to the properties of wastewater to increase oxidation treatment efficiency in the oxidation reaction bath.

In addition, the oxidation reaction bath may include a tubular flow reaction bath having a tube shape, and the tubular flow reaction bath may be provided with a plurality of oxidizing agent inlets configured to dividedly input the oxidizing agent.

Additionally, the apparatus may further include an auxiliary oxidation reaction bath installed at the rear end of the oxidation reaction bath or the rear end of the cathode bath of the electrolysis bath and configured to additionally treat pollutants remaining in the treated water chemically treated in the oxidation reaction bath.

Accordingly, pollutants remaining in the treated water after treatment in the oxidation reaction bath can be removed, and thus wastewater treatment reliability can increase.

In addition, the apparatus may further include an oxidizing agent promoting means configured to activate the oxidizing agent in the auxiliary oxidation reaction bath, and the oxidizing agent promoting means may include at least one selected from a heater configured to heat the oxidation reaction bath, a UV irradiator configured to radiate UV light, and a catalyst supply unit configured to supply a catalyst to the oxidation reaction bath.

Additionally, a peroxyacid compound may be used as an oxidizing agent in the auxiliary oxidation reaction bath.

Accordingly, pollutants remaining in the treated water after treatment in the oxidation reaction bath can be effectively treated by inputting the peroxyacid compound which is a strong oxidizing agent.

In addition, the peroxyacid compound may include at least one selected from the group consisting of hydrogen peroxide, persulfuric acid, perchloric acid, and permanganic acid.

Accordingly, various types of peroxyacid compound can be selectively used.

In addition, the electrolysis bath may be installed so that a plurality of electrolysis baths are connected in series or parallel, and the cathode bath disposed at the rear end of the electrolysis bath may be configured to produce and provide a pH adjusting agent to be used in the pH adjusting bath.

Accordingly, since a pH adjusting agent is directly produced on site, costs can be reduced, and separate storage equipment can be omitted.

In addition, the apparatus may further include a concentration unit configured to produce recycled water and separate recycled water and concentrated water using a part of raw wastewater or diluted raw wastewater, the recycled water produced in the concentration unit may be used in the preparation of an electrolyte by being input into an electrolyte supply unit configured to supply an electrolyte to the anode bath of the electrolysis bath, and the concentrated water separated in the concentration unit may be treated while mixed with inflowing wastewater.

Accordingly, since the recycled water produced in the concentration unit can be used as an electrolyte, separate equipment for supplying raw water required to prepare an electrolyte is not needed, and since the concentrated water separated in the concentration unit is subjected to integrated treatment with inflowing wastewater, separate equipment for treating the concentrated water is not needed.

Another aspect of the present invention provides a method of treating wastewater containing a non-degradable organic material, which includes: an oxidization step of oxidizing wastewater using an oxidizing agent; and an electrolysis step of reducing pollutants remaining in the treated water chemically treated in the oxidization step in a cathode bath partitioned from an anode bath by a partition.

In this case, the oxidization step may further include promoting the oxidizing agent using an oxidizing agent promoting means to activate the oxidizing agent.

In addition, a chlorine-based oxidizing agent may be used in the oxidization step, and the chlorine-based oxidizing agent may be one or more selected from chlorine, hypochlorous acid, and hypochlorite.

Additionally, in the anode bath, an electrolyte may be electrolyzed to produce the oxidizing agent used in the oxidization step.

In addition, the method may further include a pH adjustment step of adjusting a pH of wastewater to be treated in the oxidization step.

Additionally, the electrolyte used in the anode bath may be a chloride electrolyte for producing a chlorine-based oxidizing agent.

In addition, the method may further include an auxiliary oxidization step of treating pollutants remaining in the treated water chemically treated in the oxidization step.

Additionally, in the auxiliary oxidization step, a peroxyacid-based oxidizing agent may be used, and the peroxyacid-based oxidizing agent may be one or more selected from hydrogen peroxide, persulfuric acid, perchloric acid, and permanganic acid.

In addition, the auxiliary oxidization step may be performed immediately after the oxidization step or after the electrolysis step.

Additionally, the electrolysis step may be performed in multiple stages, and in the later stages of the electrolysis step, a pH adjusting agent to be used in the pH adjustment step may be produced in a cathode bath of an electrolysis bath and provided.

In addition, the method may further include a concentration step of producing recycled water and separating concentrated water using a part of raw wastewater or diluted raw wastewater, the recycled water produced in the concentration step may be used in the preparation of an electrolyte by being input into an electrolyte supply unit configured to supply an electrolyte to the anode bath of the electrolysis bath, and the concentrated water separated in the concentration unit may be treated while mixed with inflowing wastewater.

Additionally, in the oxidization step, the oxidizing agent may be dividedly input at multiple points according to the properties of wastewater.

In addition, the oxidizing agent used in the oxidization step may be input in a chlorine (Cl₂) and TOC (Cl₂:TOC) mass ratio of 10 to 50:1.

Accordingly, oxidation treatment efficiency can be improved by adjusting the input amount of the oxidizing agent according to the TOC content of wastewater.

### [Advantageous Effects]

According to an apparatus and method for treating high-concentration wastewater containing a non-degradable organic material of the present invention, wastewater containing a non-degradable organic material containing a high concentration of TOC and T-N such as ETA can be effectively treated by oxidation and electrolysis processes.

In addition, an oxidizing agent to be used in an oxidization step can be directly produced in an electrolysis bath and provided on site, and accordingly, costs and equipment required to transport and store an oxidizing agent can be reduced.

Additionally, since an additional oxidation reaction bath (an auxiliary oxidation reaction bath) is installed at the rear end of an oxidation reaction bath or the rear end of a cathode bath of an electrolysis bath, pollutants remaining in the treated water after treatment in the oxidation reaction bath, such as residual TOC and T-N, can be treated.

In addition, in the electrolysis bath, an oxidizing agent can be produced, and at the same time, oxidizing pollutants remaining in treated water, such as nitrogen oxides, can be reduced.

In this way, according to the present invention, equipment can be simplified and downsized, and costs required to operate and maintain equipment can be reduced.

In addition, wastewater treatment efficiency can be increased by dividedly inputting an oxidizing agent according to the properties of wastewater flowing into an oxidation reaction bath.

### [Description of Drawings]

FIG. 1 is a schematic block diagram for describing an apparatus for treating high-concentration wastewater containing a non-degradable organic material according to the first embodiment of the present invention.
FIG. 2 is a schematic block diagram for describing another example of the oxidation reaction bath shown in FIG. 1.
FIG. 3 is a schematic block diagram of a tubular oxidation reaction bath as still another example of the oxidation reaction bath shown in FIG. 1.
FIG. 4 is a schematic block diagram of an apparatus for treating high-concentration wastewater containing a non-degradable organic material according to the second embodiment of the present invention.
FIG. 5 is a schematic block diagram of an apparatus for treating high-concentration wastewater containing a non-degradable organic material according to the third embodiment of the present invention.
FIG. 6 is a schematic block diagram for describing a wastewater treatment process using concentrated water and recycled water in the state of FIG. 1.

### [Modes of the Invention]

Hereinafter, an apparatus and method for treating wastewater containing a non-degradable organic material according to embodiments of the present invention will be described in detail with reference to the accompanying drawings.

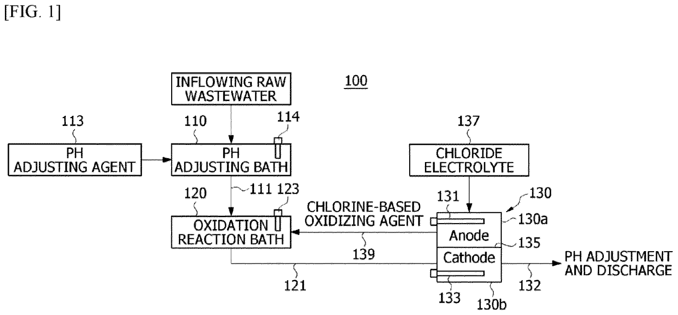

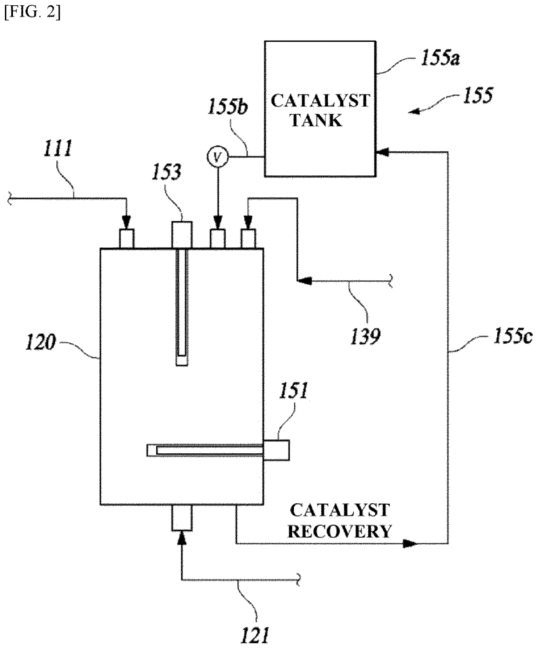

Referring to FIGS. 1 and 2, an apparatus 100 for treating wastewater containing a non-degradable organic material according to the first embodiment of the present invention includes a pH adjusting bath 110 configured to adjust a pH of inflowing wastewater to be treated, an oxidation reaction bath 120, and an electrolysis bath 130.

When wastewater to be treated flows into the pH adjusting bath 110, a certain amount of a pH adjusting chemical is supplied from a pH adjusting agent tank 113. In this case, although the pH of wastewater is not particularly limited, it is preferable to set the pH of wastewater to pH 10 to pH 13 in the pH adjusting bath 110 to control total organic carbon (TOC) and total nitrogen (T-N) removal rates and a NOₓ-N generation amount. For this purpose, the pH adjusting bath 110 includes a pH sensor 114, and the amount of a pH adjusting agent supplied from the pH adjusting agent tank 113 may be adjusted according to the measurement value of the pH sensor 114. As the pH adjusting agent, NaOH may be used, various known chemicals may also be used, and the present invention is not limited to specific chemicals.

Wastewater whose pH has been adjusted flows into the oxidation reaction bath 120 via a wastewater supply line 111 connected to the pH adjusting bath 110. An oxidizing agent is input into the wastewater flowing into the oxidation reaction bath 120, and due to the oxidizing agent, TOC contained in high-concentration wastewater is oxidized to carbon dioxide (CO₂) and ammonia nitrogen (NH₃-N) is oxidized to nitrogen (N₂). As the oxidizing agent input into the oxidation reaction bath 120, an oxidizing agent produced by electrolyzing an electrolyte in an anode bath 130a of the electrolysis bath 130 is preferably used, and a chlorine-based oxidizing agent produced by electrolyzing a chloride electrolyte is more preferably used.

In this case, the chlorine-based oxidizing agent preferably includes one or more selected from chlorine, hypochlorous acid, and hypochlorite.

In addition, as shown in FIG. 2, at least one oxidizing agent promoting means selected from a heater 151, a UV irradiator 153, and a catalyst supply unit 155 may be applied to the oxidation reaction bath 120 to activate the oxidizing agent in the oxidation reaction bath 120. The catalyst supply unit 155 may include a separately provided catalyst tank 155a and a catalyst supply line 155b configured to supply a catalyst in the catalyst tank 155a to the oxidation reaction bath 120. In the catalyst supply line 155b, a valve may be installed to control the amount of supplied catalyst.

Additionally, if necessary, the catalyst supply unit 155 may be configured so that a catalyst is recovered and resupplied via a recovery line 155c.

In addition, a plurality of the oxidation reaction baths 120 may be installed in parallel.

The electrolysis bath 130 has a configuration in which an anode bath 130a in which an anode 131 is installed and a cathode bath 130b in which a cathode 133 is installed are partitioned by a diaphragm 135.

The treated water chemically treated in the oxidation reaction bath 120 flows into the cathode bath 130b via a chemically treated water transfer line 121. In the cathode bath 130b, residual oxidizing pollutants that are untreated in the oxidation reaction bath 120 or produced during the oxidation reaction and remain in the chemically treated water are reduced. In other words, oxidizing pollutants such as nitrogen oxide (NOx-N), which are difficult to completely treat only with chemicals, may be reduced to nitrogen (N₂) in the cathode bath 130b. The treated water finally treated in the cathode bath 130b may be directly discharged via a treated water discharge line 132 or discharged after pH adjustment.

An electrolyte is supplied to the anode bath 130a from an electrolyte supply unit 137 and an oxidizing agent is produced by electrolysis in the anode bath 130a.

Particularly, when the oxidizing agent produced in the anode bath is a chlorine-based oxidizing agent, a chloride electrolyte (e.g., brine) is supplied from the electrolyte supply unit.

In this case, the anode 131 may be formed by coating a conductive matrix with one or more selected from platinum (Pt), iridium (Ir), ruthenium (Ru), tantalum (Ta), tin (Sn), boron-diamond type, molybdenum (Mo), zirconium (Zr), and nickel (Ni), but the type thereof is not limited.

The cathode 133 may be formed of one or more selected from titanium (Ti), graphite, lead (Pb), zirconium (Zr), stainless steel, aluminum (Al), zinc (Zn), and nickel (Ni), but the type thereof is not limited.

In addition, the anode 131 and the cathode 133 may be mesh-, plate-, or pipe-type electrodes, and various other types may be used.

The oxidizing agent produced in the anode bath 130a is supplied to the oxidation reaction bath 120 via an oxidizing agent supply line 139 that connects the anode bath 130a and the oxidation reaction bath 120. In this way, according to the present invention, an oxidizing agent to be used in the oxidation reaction bath 120 may be directly produced in the electrolysis bath 130 installed and supplied on site. Therefore, since separate equipment for storing an oxidizing agent is not required, the risk of leakage and explosion during storage can be addressed, and the space and costs for storage equipment can be reduced.

If necessary, the oxidizing agent supply line 139 through which the produced oxidizing agent is supplied to the oxidation reaction bath 120 may further include a buffer tank configured to supply a required amount of oxidizing agent.

Meanwhile, a wastewater treatment method using the apparatus 100 for treating wastewater containing a non-degradable organic material according to the first embodiment of the present invention, which has the above-described configuration, will be described in detail.

First, when wastewater flows into the pH adjusting bath 110, the amount of pH adjusting agent supplied in the pH adjusting agent tank 113 is adjusted according to the measurement value of the pH sensor 114, and thus the pH of wastewater is adjusted within an appropriate range. In this case, chemicals such as sodium hydroxide (NaOH) and the like may be used as the pH adjusting agent, and the pH of wastewater may be adjusted to pH 10 to pH 13, but the present invention is not limited thereto.

Wastewater whose pH has been adjusted in the pH adjusting bath 110 is transferred to the oxidation reaction bath 120. The oxidation reaction bath 120 is supplied with an oxidizing agent produced in the anode bath 130a of the electrolysis bath 130 and removes TOC and T-N contained in the wastewater through an oxidation reaction. In other words, in the oxidation reaction bath 120, TOC is oxidized to carbon dioxide (CO₂), and ammonia nitrogen (NH₃-N) is oxidized to N₂.

Here, when an oxidizing agent supplied from the anode bath 130a to the oxidation reaction bath 120 is a chlorine-based oxidizing agent and hypochlorite is used as the chlorine-based oxidizing agent, 1 to 12 wt% hypochlorite is preferable. Also, the input amount of the chlorine-based oxidizing agent is preferably adjusted with a chlorine gas (Cl₂) and TOC mass ratio (Cl₂:TOC) of 10 to 50:1. In this case, a reaction temperature in the oxidation reaction bath 120 is preferably controlled by the above-described oxidizing agent promoting means so as to maintain a temperature of 50 to 100 °C. For this purpose, the oxidation reaction bath 120 preferably includes a temperature sensor 123 configured to monitor a reaction temperature.

In addition, as the oxidizing agent promoting means, preferably, UV is radiated by a UV irradiator.

In order to supply a chlorine-based oxidizing agent to the oxidation reaction bath 120, a chloride electrolyte such as brine is supplied from the electrolyte supply unit 137 to the electrolysis bath 130 and electrolyzed. As a result, a chlorine-based oxidizing agent may be produced and supplied on site.

In addition, the treated water chemically treated in the oxidation reaction bath 120 flows into the cathode bath 130b of the electrolysis bath 130, and untreated pollutants remaining in the treated water, such as residual nitrogen oxide, are removed through a cathodic reduction reaction.

Meanwhile, the process by which electrolysis takes place as a chloride electrolyte is supplied to the anode bath 130a of the electrolysis bath 130 and the chemically treated water flows into the cathode bath 130b may be understood through the following reaction equations.

### <Anode reaction>

2Cl⁻ → Cl₂ + 2e⁻

Cl₂ + H₂O → HOCl + HCl

HOCl ↔ OCl⁻ + H⁺

### <Cathode reaction>

2H₂O + 2e⁻ → H₂ + 2OH⁻

2Na⁺ + 2OH⁻ → 2NaOH

### <Cathode-nitrate nitrogen treatment reaction>

NO₃⁻ + H₂O + 2e⁻ → NO₂⁻ + 2OH⁻

NO₃⁻ + 3H₂O + 5e⁻ → 0.5N₂ + 6OH⁻

NO₃⁻ + 7H₂O + 8e⁻ → NH₄⁺ + 10OH⁻

As described above, according to the apparatus 100 for treating wastewater containing a non-degradable organic material according to the first embodiment of the present invention and the wastewater treatment method using the same, the oxidizing agent produced in the anode bath 130a of the electrolysis bath 130 installed on site is directly supplied to the oxidation reaction bath 120, wastewater whose pH has been adjusted in the pH adjusting bath 110 is treated through an oxidation reaction in the oxidation reaction bath 120, and thus TOC and T-N contained in the wastewater may be treated.

In addition, while an electrolysis process proceeds in the electrolysis bath, residual untreated oxidizing pollutants in treated water or produced during the oxidation reaction may be reduced to nitrogen (N₂) in the cathode bath 130b. The finally treated water may be directly discharged via the treated water discharge line 132 or discharged after pH adjustment.

In addition, the oxidation reaction bath 120 may include at least one means configured to dividedly input an oxidizing agent, such as a plurality of oxidizing agent inlets and an input amount control device, which are capable of dividedly inputting an oxidizing agent.

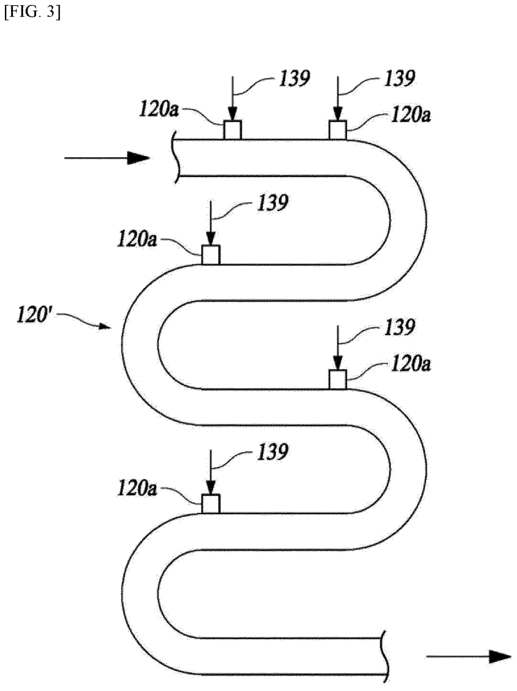

A preferable example of the means is a tubular reaction bath. In other words, as shown in FIG. 3, a tubular flow reaction bath 120' having a tube shape is preferred. In this case, the tubular flow reaction bath 120' is preferably provided with a plurality of oxidizing agent inlets 120a for dividedly inputting an oxidizing agent at different positions. Accordingly, the oxidizing agent supply line 139 may be connected to each of the oxidizing agent inlets 120a to allow an oxidizing agent to be dividedly input, and thus oxidation efficiency may increase.

In other words, since the tubular flow reaction bath 120' has multiple oxidizing agent input points, oxidation reactivity may be adjusted, and thus the production of oxidizing pollutants such as nitrogen oxide (NOₓ-N) may be suppressed.

Experimental Example 1 regarding the oxidation treatment efficiency of wastewater when an oxidizing agent is dividedly input according to pH using the above-described tubular flow reaction bath 120' is described as follows.

Experimental Example 1, in which oxidation treatment efficiency was confirmed by dividedly inputting an oxidizing agent as described above, is described as follows.

### <Experimental Example 1>

- Experimental conditions: Cl₂:TOC=30:1, a reaction temperature of 90 °C, and a reaction time of 90 minutes
- Initial concentration: TOC 1852 mg/L, TN 1458 mg/L, and NO₃-N 12.3 mg/L

**[Table 1]**

| | | | | | | | | |
|---|---|---|---|---|---|---|---|---|
| pH of inflowing wastewater | 1.65 | 6.88 | 10 | 12 | | | | |
| Number of divided inputs | 1 time | 6 times | 1 time | 6 times | 1 time | 6 times | 1 time | 6 times |
| TN removal rate (%) | 59.7 | 80.7 | 77.7 | 80.9 | 85.5 | 88.1 | 90.2 | 90.3 |
| TN to NO₃ conversion rate (%) | 62.2 | 17.1 | 27.5 | 20.5 | 15.6 | 9.6 | 9.9 | 5.1 |
| TOC removal rate (%) | 83.1 | 88.9 | 94.1 | 95.3 | 91.4 | 89.5 | 94.5 | 91.4 |
| * TN to NO₃ conversion rate (%): Proportion of TN removed during reaction converted to NO₃-N | | | | | | | | |
| * In all experiments, the same amount of oxidizing agent was input. | | | | | | | | |

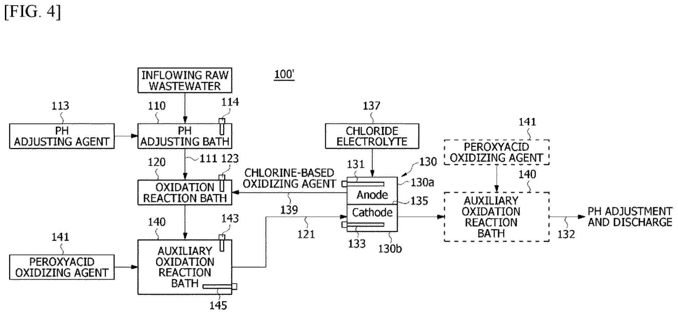

As can be seen from Experimental Example 1 and Table 1, as an oxidizing agent is dividedly input, a T-N removal rate can be increased, and a conversion rate to NO₃-N produced during oxidation can be decreased. Also, as shown in FIG. 4, according to an apparatus 100' for treating wastewater containing a non-degradable organic material according to the second embodiment of the present invention, when residual TOC and T-N remain in the treated water treated in an oxidation reaction bath 120, an auxiliary oxidation reaction bath 140 for treating the residual TOC and T-N is further provided, and thus an additional oxidization step may be further performed.

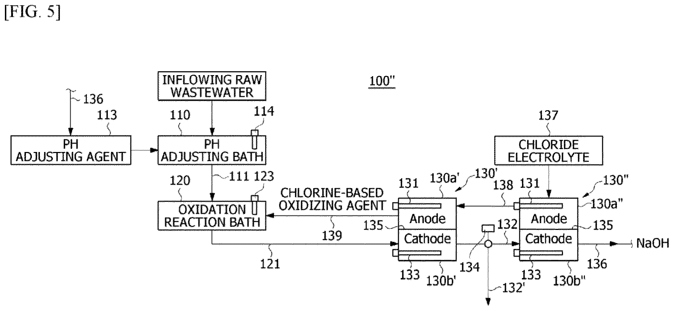

As shown by a solid line in FIG. 5, the auxiliary oxidation reaction bath 140 may be installed at the rear end of the oxidation reaction bath 120, that is, on a chemically treated water transfer line 121. Alternatively, as shown by a dashed line, the auxiliary oxidation reaction bath 140 may be installed at the rear end of a cathode bath 130b of an electrolysis bath 130, that is, on a treated water discharge line 132. For example, the auxiliary oxidation reaction bath 140 is configured to be supplied with a persulfuric acid-based chemical (e.g., persulfate) as an oxidizing agent from a peroxyacid oxidizing agent supply unit 141, oxidize TOC remaining in the treated water to CO₂, and treat a part of T-N. The persulfate is preferably used at 1 to 49 wt% and may be specifically selected from the group consisting of persulfate anions and peroxymonosulfate anions.

The peroxyacid compound (persulfate) is preferably input to the auxiliary oxidation reaction bath 140 in a persulfate (PS):TOC mass ratio of 10 to 100:1, and a reaction temperature is preferably controlled to a temperature of 50 to 100 °C. For this purpose, the auxiliary oxidation reaction bath 140 preferably includes a temperature sensor 143 and a heater 145. In addition, UV, a catalyst, or the like may be used as an oxidizing agent promoting means.

In other words, depending on the concentration or reaction condition of the inflowing wastewater, TOC may not be completely treated in the oxidation reaction bath 120, and some TOC may remain in the chemically treated water. This residual TOC may be completely treated by installing the auxiliary oxidation reaction bath 140. Also, in consideration of site conditions, installation space, treatment efficiency, and the like, the auxiliary oxidation reaction bath 140 may be installed at the rear end of the oxidation reaction bath 120 or the rear end of the cathode bath 130b of the electrolysis bath 130, and thus flexibility in design may be exhibited.

Here, complete treatment means treating the pollutant of inflowing wastewater so as below the water quality discharge concentration standard regulated by law.

In addition, as shown in FIG. 5, according to an apparatus 100" for treating wastewater containing a non-degradable organic material according to the third embodiment of the present invention, a plurality of first and second electrolysis baths 130' and 130" are installed at the rear end of an oxidation reaction bath 120.

In this case, an electrolyte supply unit 137 supplies an electrolyte to an anode bath 130a" of the second electrolysis bath 130", and the electrolyzed water including the electrolyte supplied to the anode bath 130a" is supplied to an anode bath 130a' of the first electrolysis bath 130' via an electrolyzed water supply line 138. Of course, the electrolyte supply unit 137 may supply an electrolyte to the respective anode baths 130a' and 130a" of the first and second electrolysis baths 130' and 130".

In the anode baths 130a' and 130a", the same electrolysis reaction occurs as in the anode bath 130a previously described and shown in FIG. 1, and thus chlorine, hypochlorous acid, and hypochlorite, which are used as a chlorine-based oxidizing agent, may be produced and supplied to the oxidation reaction bath 120.

Of course, respective oxidizing agents produced in the anode baths 130a' and 130a" may be supplied to the oxidation reaction bath 120.

The chemically treated water is supplied from the oxidation reaction bath 120 to a cathode bath 130b' of the first electrolysis bath 130' and residual oxidizing pollutants such as nitrogen oxide (NOx-N) are treated in the cathode bath 130b'.

The treated water treated in the cathode bath 130b' may be discharged via a discharge line 132' connected to a treated water discharge line 132 after pH adjustment. In this case, since the treated water discharge line 132 is directly connected to a cathode bath 130b" of the second electrolysis bath 130", the treated water may be supplied to the cathode bath 130b". In this case, NaOH, which may be used as a pH adjusting agent by reaction with the treated water, is produced in the cathode bath 130b" of the second electrolysis bath 130" disposed at the rear end of the first electrolysis bath 130'. NaOH produced in the cathode bath 130b" is supplied to a pH adjusting agent supply unit 113 via a pH adjusting agent supply line 136 connected to the pH adjusting agent supply unit 113. Of course, the chemically treated water treated in the oxidation reaction bath 120 may be supplied to the cathode baths 130b' and 130b". In this way, since the electrolysis step is performed in multiple stages, either in series or parallel, a pH adjusting agent may be directly produced in the later stages of the electrolysis step and used on site. Therefore, there is no need to separately obtain a pH adjusting agent from a distance, and thus transportation and storage costs can be reduced.

A three-way valve 134 may be installed at a portion where the discharge line 132' branches from the treated water discharge line 132 to adjust the discharge direction and amount of treated water.

Meanwhile, the effects of the apparatus 100, 100', and 100" for treating wastewater containing a non-degradable organic material according to the embodiments of the present invention, which have the above-described configurations, can be specifically confirmed in detail through the following experimental examples.

### <Experimental Example 2>

- Treatment method: treatment with chlorine-based oxidizing agent → electrolysis
- Test conditions
   (1) Wastewater: ethanolamine (ETA) solution
   (2) Treatment with chlorine-based oxidizing agent (oxidation reaction bath) conditions: 12% sodium hypochlorite (NaOCl) used as an oxidizing agent, a reaction time of 30 minutes at 90 °C, and an oxidizing agent input amount of Cl₂:TOC=30:1
   (3) Electrolysis (diaphragm type, analysis of cathode water concentration): a current density of 100 mA/cm², an electrolysis time of 60 minutes, an electrode gap of 2 cm, a cation separator used as a separator, DSA used as an anode, and titanium used as a cathode

When an ethanolamine solution was oxidized in an oxidation reaction bath 120 and then electrolyzed in an electrolysis bath 130 under the above-described experimental conditions, TOC, T-N, and NO₃-N measurement values and TOC and T-N removal rates were confirmed at each step, and results thereof are shown in the following Table 2.

**[Table 2]**

| Test order | | TOC (mg/L) | T-N (mg/L) | NO₃-N (mg/L) | TOC removal rate (%) | T-N removal rate (%) |
|---|---|---|---|---|---|---|
| 1 | Raw wastewater (ETA) | 8840 | 5233 | N.D | - | - |
| 2 | Treatment with chlorine-based oxidizing agent | 26.2 | 190.6 | 142.0 | 99.7 | 96.4 |
| 3 | Electrolysis (concentration of solution in cathode bath) | 7.4 | 20.3 | 15.9 | 99.9 | 99.2 |

As can be seen from Experimental Example 2, as wastewater (ethanolamine, ETA) is treated through a chlorine-based treatment process and an electrolysis process, TOC and TN contained in wastewater can be effectively reduced.

### <Experimental Example 3>

- Treatment method: treatment with chlorine-based oxidizing agent → treatment with persulfate-based oxidizing agent → electrolysis
- Test conditions:
   (1) Wastewater: ethanolamine-containing wastewater (wastewater from condensate polishing plants)
   (2) Treatment with chlorine-based oxidizing agent (oxidation reaction bath): 12% sodium hypochlorite (NaOCl) used as an oxidizing agent, a reaction time of 30 minutes at 90 °C, and an oxidizing agent input amount of Cl₂:TOC=20:1
   (3) Treatment with persulfate oxidizing agent: persulfate used as an oxidizing agent, a reaction time of 30 minutes at 90 °C, and an oxidizing agent input amount of PS:TOC=40:1
   (4) Electrolysis: a current density of 100 mA/cm², an electrolysis time of 60 minutes, an electrode gap of 2 cm, DSA used as an anode, and titanium used as a cathode

When ethanolamine-containing wastewater was oxidized in an oxidation reaction bath 120, treated in an auxiliary oxidation reaction bath 140, and then electrolyzed in an electrolysis bath 130 under the above-described experimental conditions, TOC, TN, and NO₃-N measurement values and TOC and TN removal rates were confirmed at each step, and results thereof are shown in the following Table 4.

**[Table 3]**

| Test order | | TOC (mg/L) | T-N (mg/L) | NO₃-N (mg/L) | TOC removal rate (%) | T-N removal rate (%) |
|---|---|---|---|---|---|---|
| 1 | Raw wastewater | 1863 | 1557.5 | 5 | - | - |
| 2 | Treatment with chlorine-based oxidizing agent | 483.6 | 189.3 | 39.5 | 74.0 | 87.8 |
| 3 | Treatment with persulfate oxidizing agent | 16.8 | 51.2 | 46.9 | 99.1 | 96.7 |
| 4 | Electrolysis | 12.2 | 10.4 | 10 | 99.3 | 99.3 |

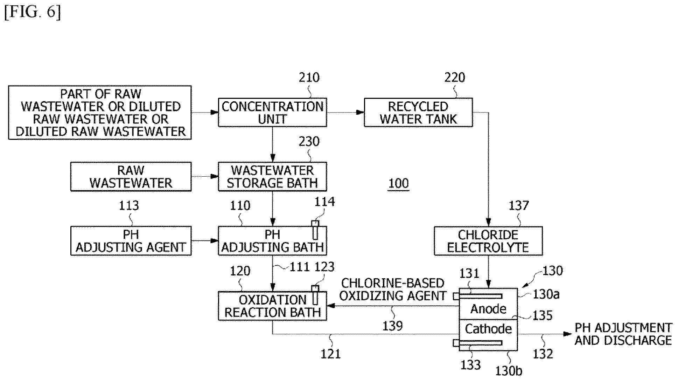

As can be seen from Experimental Example 4, when wastewater is subjected to a chlorine-based treatment process, a persulfuric acid treatment process, and an electrolysis process, NO₃-N can be more effectively treated as well as TOC and T-N contained in ethanolamine wastewater. Also, as shown in FIG. 6, raw wastewater may be supplied to a pH adjusting bath 110 via a wastewater storage bath 230 and subjected to a treatment process, and a part of the raw wastewater or diluted raw wastewater may be concentrated in a concentration unit 210, supplied to the wastewater storage bath 230, and subjected to a treatment process.

In this case, a part of the raw wastewater or diluted raw wastewater may be supplied to the concentration unit 210 immediately after being subjected to a pretreatment process or a simple filtration process depending on the properties of the inflowing wastewater.

The concentration unit 210 is configured to filter a part of the pretreated raw wastewater or diluted raw wastewater and separate it into concentrated water and permeate water, and may be composed of at least one selected from reverse osmosis (RO), nanofiltration (NF), electrodialysis reversal (EDR), and capacitive deionization (CDI) systems. The concentrated water discharged from the concentration unit 210 is stored in the wastewater storage bath 230 installed on a wastewater supply path while being mixed with raw wastewater and supplied to the pH adjusting bath 110 to be treated in a desired amount.

In addition, the treated water (permeate water) that has passed through the concentration unit 210 is transferred to and stored in a separate recycled water tank 220. Also, some or all of the recycled water stored in the recycled water tank 220 is supplied to an electrolyte supply unit 137 in which an electrolyte to be used in electrolysis is stored, and used in the production of an oxidizing agent.

As described above, raw wastewater or wastewater concentrated in the concentration unit 210 is collected and stored in the wastewater storage bath 230, and a desired amount is supplied to a wastewater treatment process and treated.

In this case, the technique of using recycled water obtained through the concentration unit described in FIG. 6 can be applied to all of the configurations of FIGS. 1, 4, and 5.

Although specific embodiments of the present invention have been described and shown above, it is clear to those skilled in the art that the present invention is not limited to the described embodiments, and that various modifications and changes can be made without departing from the spirit and scope of the present invention. Accordingly, it will be understood that the modified embodiments are not independent from the technical spirit and perspective of the present invention but fall within the scope of the present invention defined by the appended claims.

**[List of Reference Numerals]**

| | | | |
|---|---|---|---|
| 100, 100', 100" | apparatus for treating high concentration of wastewater containing non-degradable organic material | | |
| 110: | pH adjusting bath | 113: | pH adjusting agent supply unit |
| 120: | oxidation reaction bath | 130, 130', 130": | electrolysis bath |
| 131: | anode | 133: | cathode |
| 135: | diaphragm | 137: | electrolyte |
| 140: | auxiliary oxidation reaction bath | 141: | peroxyacid oxidizing agent supply unit |
| 210: | concentration unit | 220: | recycled water tank |
| 230: | wastewater storage bath | | |

## Claims

1. An apparatus for treating wastewater containing a non-degradable organic material, the apparatus comprising:
an oxidation reaction bath configured to oxidize wastewater using an oxidizing agent to treat total organic carbon (TOC) and total nitrogen (T-N); and
an electrolysis bath having an anode bath configured to electrolyze an electrolyte to produce and provide the oxidizing agent used in the oxidation reaction bath and a cathode bath partitioned from the anode bath by a partition and configured to reduce pollutants remaining in the treated water chemically treated in the oxidation reaction bath.

2. The apparatus of claim 1, further comprising an oxidizing agent supply unit configured to receive an oxidizing agent to be supplied to the oxidation reaction bath from the anode bath of the electrolysis bath and supply the oxidizing agent to the oxidation reaction bath.

3. The apparatus of claim 1, further comprising an oxidizing agent promoting means configured to activate the oxidizing agent in the oxidation reaction bath.

4. The apparatus of claim 4, wherein the oxidizing agent promoting means comprises at least one selected from a heater configured to heat the oxidation reaction bath, a UV irradiator configured to radiate UV light, and a catalyst supply unit configured to supply a catalyst to the oxidation reaction bath.

5. The apparatus of claim 1, further comprising a pH adjusting bath configured to adjust a pH of wastewater containing TOC and T-N.

6. The apparatus of any one of claims 1 to 5, wherein the oxidizing agent used in the oxidation reaction bath is a chlorine-based oxidizing agent.

7. The apparatus of any one of claims 1 to 5, further comprising an auxiliary oxidation reaction bath installed at the rear end of the oxidation reaction bath or the rear end of the cathode bath of the electrolysis bath and configured to additionally treat pollutants remaining in the treated water chemically treated in the oxidation reaction bath.

8. The apparatus of claim 7, wherein in the auxiliary oxidation reaction bath, a peroxyacid compound is used as an oxidizing agent.

9. The apparatus of claim 8, wherein the peroxyacid compound comprises at least one selected from the group consisting of hydrogen peroxide, persulfuric acid, perchloric acid, and permanganic acid.

10. The apparatus of any one of claims 1 to 5, wherein the electrolysis bath is installed so that a plurality of electrolysis baths are connected in series or parallel, and the cathode bath disposed at the rear end of the electrolysis bath is configured to produce and provide a pH adjusting agent to be used in the pH adjusting bath.

11. The apparatus of any one of claims 1 to 5, wherein the oxidation reaction bath comprises a means configured to dividedly input the oxidizing agent according to the properties of inflowing wastewater.

12. The apparatus of any one of claims 1 to 5, further comprising a concentration unit configured to separate concentrated water and recycled water,
wherein the concentrated water concentrated in the concentration unit is treated while mixed with inflowing wastewater.

13. The apparatus of claim 12, wherein the recycled water separated in the concentration unit is supplied to and used in a chloride electrolyte supply unit configured to supply a chloride electrolyte to the anode bath of the electrolysis bath.

14. The apparatus of any one of claims 1 to 5, wherein the oxidation reaction bath comprises a tubular flow reaction bath having a tube shape, and
the tubular flow reaction bath is provided with a plurality of oxidizing agent inlets configured to dividedly input the oxidizing agent.

15. A method of treating wastewater containing a non-degradable organic material, the method comprising:
an oxidization step of oxidizing wastewater using an oxidizing agent; and
an electrolysis step of reducing pollutants remaining in the treated water chemically treated in the oxidization step in a cathode bath partitioned from an anode bath by a partition.

16. The method of claim 15, wherein the oxidization step further comprises promoting the oxidizing agent using an oxidizing agent promoting means to activate the oxidizing agent.

17. The method of claim 16, wherein in the anode bath, an electrolyte is electrolyzed to produce the oxidizing agent used in the oxidization step.

18. The method of claim 15, further comprising a pH adjustment step of adjusting a pH of wastewater to be treated in the oxidization step.

19. The method of any one of claims 15 to 18, further comprising an auxiliary oxidization step of treating TOC remaining in the treated water chemically treated in the oxidization step using a peroxyacid compound.

20. The method of claim 19, wherein the auxiliary oxidization step is performed immediately after the oxidization step or after the electrolysis step.

21. The method of any one of claims 15 to 18, wherein the electrolysis step is performed in multiple stages, and
in the later stages of the electrolysis step, a pH adjusting agent to be used in the pH adjustment step is produced and provided in a cathode bath of an electrolysis bath.

22. The method of any one of claims 15 to 18, further comprising a concentration step of separating concentrated water and recycled water,
wherein the concentrated water concentrated in the concentration step is treated while mixed with inflowing wastewater.

23. The method of claim 22, wherein the recycled water separated in the concentration step is supplied to be used as a chloride electrolyte supplied to the anode bath.

24. The method of any one of claims 15 to 18, wherein in the oxidization step, the oxidizing agent is dividedly input at multiple points.

25. The method of any one of claims 15 to 18, wherein the oxidizing agent used in the oxidization step is input in a chlorine (Cl₂) and TOC (Cl₂:TOC) mass ratio of 10 to 50:1.

26. The method of claim 19, wherein the peroxyacid oxidizing agent comprises at least one selected from the group consisting of hydrogen peroxide, persulfuric acid, perchloric acid, and permanganic acid.
